# EUROPEAN PATENT APPLICATION

(11) **EP 2 112 736 A1**
(43) Date of publication of application: **28.10.2009**
(21) Application number: 08154872.9
(22) Date of filing: 21.04.2008
(51) Int. Cl.: H02H 7/055

(54) **Arc detector and associated method for detecting undesired arcs**

(71) Applicant: ABB Research Ltd., 8050 Zürich (CH)
(72) Inventor: Jonsson, Lars, 723 51, Västeraas (SE); Halen, Stefan, 722 25, Västeraas (SE)
(74) Representative: Dahlstrand, Björn

(57) **Abstract**

It is presented a method for detecting arcs of an on-load tap changer of a transformer. The method comprises the steps of: receiving an electromagnetic signal representing an arc using an antenna and providing an arc signal; receiving a synchronisation signal from the on-load tap changer; determining, depending on the time of the arc signal in relation to a most recently received synchronisation signal, whether the arc signal represents a normal arc or an undesired arc, sending an arc type signal representing a normal arc when it is determined that a normal arc is detected; and sending an arc type signal representing an undesired arc when it is determined that an undesired arc is detected. A corresponding arc detector is also presented.

## Description

### FIELD OF INVENTION

The present invention relates generally to detecting arcs, and more particularly to discriminating between normal and undesired arcs.

### BACKGROUND

In many electrical fields, arcing, i.e. electrical discharging, can occur. Some arcing can be a normal part of the operation, while some arcing is undesired and can even be dangerous.

For example, in power transformers, on-load tap changers (OLTC) are used to change tapping connections of transformer windings while the transformer is energised. Some arcing will occur, and it is desired to keep such arcing inside vacuum containers, rather than e.g. arcing in transformer oil. Arcing in oil should be detected so further arcing can be prevented. This is because contacts in oil are of a material that wears with arcing. Furthermore, arcing in oil reduces the quality of the oil, leading to shorter service intervals. It is therefore desired to be able to discriminate between normal arcing inside the vacuum container and undesired arcing outside the vacuum container.

The American patent US-6,448,758 presents a diagnostic method for determining a characteristic of electrode contacts and/or contacted surfaces comprising the steps of: sensing, during a movement that causes an electrode to have a break contact event with a first contacted surface and to have a make contact event with a second contacted surface, an RF signal from at least one electrical discharge event during that movement; and using a parameter of the RF signal to diagnose the characteristic of the electrode contacts and/or contacted surfaces. In a preferred embodiment of the present invention, a step may be included of sensing, simultaneously with the RF signal sensing step, a vibration signal generated by at least one of the break contact event and the make contact event; and using a parameter of the vibration signal to assist in diagnosing the characteristic of the electrode contacts.

While the presented patent shows a solution for detecting electrical discharges, it is not presented a way to detect normal operation of an on-load tap changer.

Consequently, there is a need to, in on-load tap changers, detect and discriminate between normal arcs and undesired arcs, and to provide means for monitor normal operation.

### SUMMARY OF THE INVENTION

An object of the present invention is to provide an arc detector and method for detecting both normal and undesired operating conditions of an OLTC.

According to the invention there is provided a method for detecting arcs of an on-load tap changer of a transformer. The method comprises the steps of: receiving an electromagnetic signal representing an arc using an antenna and providing an associated arc signal; receiving a synchronisation signal from the on-load tap changer; determining, depending on the time of the arc signal in relation to a most recently received synchronisation signal, whether the arc signal represents a normal arc or an undesired arc, sending an arc type signal representing a normal arc when it is determined that a normal arc is detected; and sending an arc type signal representing an undesired arc when it is determined that an undesired arc is detected.

Normal arcs are to be interpreted as arcs that are part of normal operation of the on-load tap changer, and/or normal arcs do not significantly damage the on-load tap changer. Undesired arcs are arcs which are not part of the normal operation, and/or may damage or wear parts of the on-load tap changer or transformer.

By providing signals both for normal and undesired arcs, it is possible to monitor both normal operation and alarm situations. For example, any change in the normal arc situation in frequency, number, etc. can trigger a warning signal to an operator indicating improper operation of the on-load tap changer.

The arc type signal representing a normal arc may be used to monitor proper operation of the on-load tap changer.

The arc type signal representing an undesired arc may be used to trigger an alarm.

A normal arc may be an arc inside any vacuum container of the on-load tap changer and an undesired arc may be an arc outside any of the vacuum containers of the on-load tap changer.

The undesired arc may be an arc in oil of said on-load tap changer.

The determining may involve determining that the arc signal represents a normal arc when a time difference between the arc signal and the most recently received synchronisation signal is less than a threshold time, and that the arc signal represents an undesired arc when the time difference is greater than the threshold time.

Using the time difference between the last synchronisation signal and the detected arc, a relationship between the actual events of the operation of the OLTC and the arc is established, allowing more accurate discrimination between normal and undesired arcs.

The synchronisation signal may be generated as a response to an opening vacuum switch of the on-load tap changer.

The synchronisation signal may be generated as a response to an closing vacuum switch of the on-load tap changer.

The synchronisation signal may be generated as a response to change in oil pressure of the on-load tap changer. The oil pressure change may be generated due to a closing and/or opening vacuum switch of the on-load tap changer.

A second aspect of the invention is an arc detector for detecting arcs of an on-load tap changer of a transformer. The arc detector comprises: an antenna arranged to receive an electromagnetic signal representing an arc and to provide an associated arc signal; an discriminator arranged to repeatedly receive a synchronisation signal, and wherein the discriminator is further arranged to determine, depending on a time of the arc signal in relation to a most recently received synchronisation signal, when an arc signal from the antenna represents a normal arc or an undesired arc. The discriminator is further arranged to send an arc type signal representing a normal arc when it is determined that a normal arc is detected and to send an arc type signal representing an undesired arc when it is determined that an undesired arc is detected.

The determiner may be arranged to use a time difference between the arc signal and a most recently received synchronisation signal from the on-load tap changer, to determine when the arc signal represents a normal arc or an undesired arc.

It is to be noted that any feature of the first aspect may be applied to the second aspect, and vice versa.

Generally, all terms used in the claims are to be interpreted according to their ordinary meaning in the technical field, unless explicitly defined otherwise herein. All references to "a/an/the element, device, component, means, step, etc." are to be interpreted openly as referring to at least one instance of the element, device, component, means, step, etc., unless explicitly stated otherwise. The steps of any method disclosed herein do not have to be performed in the exact order disclosed, unless explicitly stated.

### BRIEF DESCRIPTION OF DRAWINGS

The invention is now described, by way of example, with reference to the accompanying drawings, in which:
Fig 1 is a schematic diagram illustrating an on-load tap changer 102 of a transformer;
Fig 2 is a schematic diagram of an arc detector 231, which can be used with the on-load tap changer of Fig 1;
Fig 3 is a diagram illustrating the use of a synchronisation signal in an embodiment of the present invention; and
Fig 4 is a flow chart illustrating a method of detecting undesired arcs according to an embodiment of the present invention.

### DETAILED DESCRIPTION OF PREFERRED EMBODIMENTS

The present invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

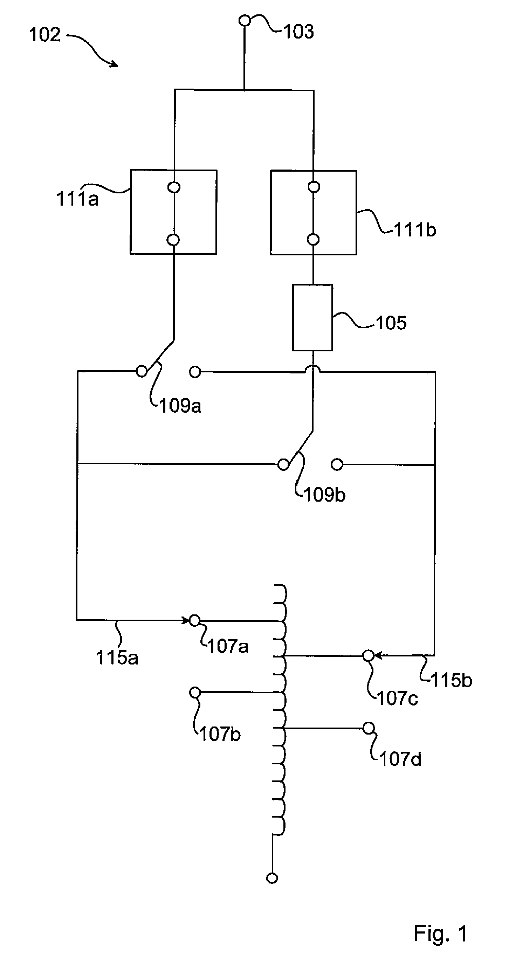

Fig 1 is a schematic diagram illustrating an on-load tap changer 102 of a transformer. The on-load tap changer (OLTC) 102 is used to change the tapping connection of the transformer winding while the transformer is energised. First the components of the OLTC 102 will be explained, followed by a use scenario. As shown in Fig 1, a number of tapping connections 107a-d are arranged to correspond to various voltages. Some of these tapping connections 107a-b are arranged on one side and some of these tapping connections 107c-d are arranged on another side. There are two tap selectors 115a-b, one for each side. The left hand tap selector 115a is here connected to tapping connection 107a and the right hand tap selector 115b is here connected to tapping connection 107c.

A terminal 103 is used to connect a load. The terminal is connected to two vacuum switches 111a and 111b. The vacuum switches are switches arranged in a vacuum container, such as a vacuum bottle. The left vacuum switch 111a is connected to a first selector switch 109a. The right vacuum switch 111b is connected to an impedance 105. It is to be noted that the impedance 105 may be a pure resistor or a reactance impedance. The impedance 105 is further connected to a second selector switch 109b. As can be seen, both selector switches 109a-b can connect to either the left tap selector 115a or the right tap selector 115b.

In the situation shown in Fig 1, both selector switches are connected to the left tap selector 115a. Since both vacuum switches 111a-b are closed, the terminal 103 is effectively connected to the left tap selector 115a which is connected to the tap connection 107a.

It will now be described one example of how the terminal 103 is supplied with a new voltage, without interrupting the supply of power. In other words, a load can be connected to terminal 103 during this whole procedure.

Initially, the tap selector 115b is connected to the tap connection corresponding to the desired new voltage. In this example, the desired tap connection is assumed to be tap connection 107c. If required, the tap selector 115b, which currently is not under load, performs any necessary switching to connect to the desired tap connection (which is not required here).

The left vacuum switch 111a then opens, whereby the first selector switch 109a can switch so it is connected to the right tap selector 115b. The first selector switch 109a is off-load during the switch, since the left vacuum switch 111a is open.

The left vacuum switch 111a then closes, connecting the terminal 103, through the first selector switch 109a to the right tap selector 115b. The impedance 105 prevents a short circuit between tap connections 107a and 107c.

The right vacuum switch 111b then opens, whereby the second selector switch 109b can switch so it is connected to the right tap selector 115b. The second selector switch 109b is off-load during the switch, since the left vacuum switch 111b is open.

Finally, the right vacuum switch 111b closes whereby the terminal 103 is connected to the right tap selector 115b and tap connection 107c. Due to the impedance 105, almost all current will flow through the left vacuum switch 111a and the first selector switch 109a.

It has thus been illustrated how terminal 103 is now connected to a new tapping connection while the transformer at all times was in a state allowing it to be energised. Since all breaking and closing of switches under load are performed using the vacuum switches 111a-b, arcs in oil should normally not occur. Arcs do occur in the vacuum switches 111a-b, but the switches are designed to withstand a large number of arcs.

This method works the same way in to connect to any of the tap connections 107a-b on the left hand side, with the only difference that the selector switches switch in the other direction.

It should be noted that the number of tapping connections shown in Fig 1 are only selected for illustrative purposes; any number of suitable tapping connections can be provided.

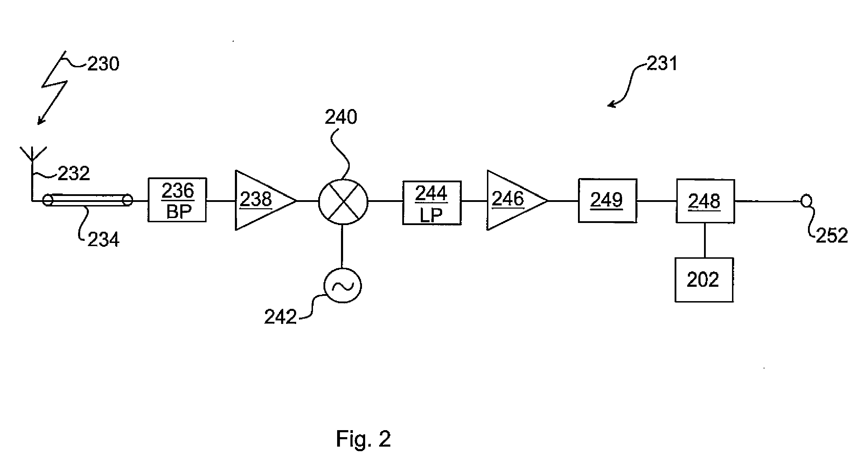

Fig 2 is a schematic diagram of an arc detector 231, which can be used with on-load tap changer 102 of Fig 1.

The arc detector 231 comprises an antenna 232 which detects an electromagnetic signal 230 from the arc. The electromagnetic signal 230 is for example radiation which is detectable even after if the arc is produced within a vacuum container and needs to pass through the walls of the vacuum container and any surrounding oil. Likewise, a radiation signal from an arc in oil is equally detectable. Consequently, the antenna 232 does not need to be in direct contact with the source of the arc. The signal from the antenna 232 is passed through a co-axial cable 234 to a band-pass filter 236. The band-pass filter emphasises a frequency band where the arc signal has substantial energy. After amplification by an amplifier 238, the signal is mixed in a mixer 240 with a signal from an oscillator 242 to decrease the signal frequency. A low-pass filter 244 reduces the band-width further. After another amplification by amplifier 246, an envelope detector 249 optionally creates an envelope of the signal provided from the amplifier 246. Finally, a discriminator 248 discriminates between a normal arc inside or an undesired arc outside any of the vacuum containers 111a-b (Fig 1).

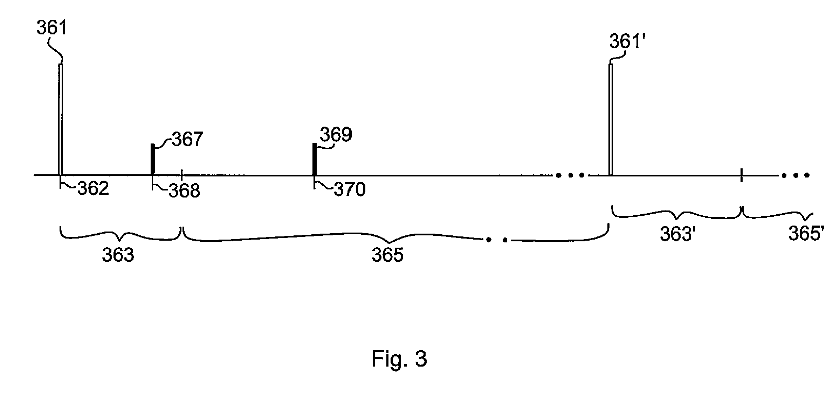

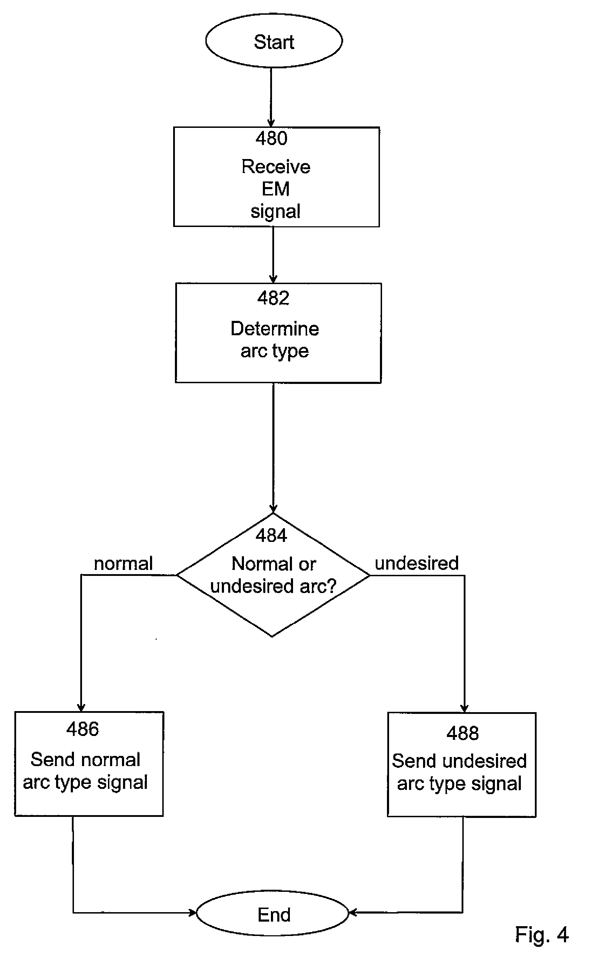

The discriminator 248 receives a synchronisation signal related to the OLTC 202, which for instance may be the OLTC 102 of Fig 1. The discriminator determines a time difference between the most recently received synchronisation signal and the arc signal. Using the time difference, the discriminator 248 thus determines whether the arc signal is a normal signal, i.e. from within any of the vacuum containers 111a-b or an undesired signal from outside any of the vacuum containers 111a-b. This discrimination is described in more detail below, in conjunction with Figs 3 and 4.

The output from the discriminator 248 is an arc type signal on terminal 252, where it is indicated both that an arc has been detected, and whether the indicated arc is a normal arc or an undesired arc.

Fig 3 is a diagram illustrating the use of a synchronisation signal in an embodiment of the present invention. This embodiment involves the arc detector of Fig 2 and the OLTC 102 of Figs 1A-C, whereby references will be made to elements of these figures.

A synchronisation signal 361 is sent from the OLTC 102 to the arc detector 231 at a synchronisation time 362. The synchronisation signal 361 can for example be sent every time the OLTC opens and/or closes a vacuum switch 115a-b.

The synchronisation signal 361 is a signal related to the normal operation of the OLTC, whereby normal arcs within the vacuum container 111 of the OLTC 102 may occur.

Consequently, any arcs detected by the arc detector 231 in a normal arc period 363 determined by the arc being within threshold time period of the synchronisation signal 361, are considered to be normal arcs. Optionally, in some cases it can be desired that the normal arc period is offset from the synchronisation signal 361. In other words, the normal arc period 363 may start an offset time period after the synchronisation signal 361 and the normal arc period 363 can have a fixed duration. Any arcs detected after this threshold time, in an undesired arc period 365, are not related to the normal operation of the OLTC 102 and are determined to be undesired arcs. The undesired arc period 365 may end with the receipt of a new synchronisation signal 361'. Alternatively, the undesired arc period 365 may end after a certain duration (not shown). In the undesired arc period 365 with a fixed duration, if a new synchronisation signal 361' is received during the undesired arc period 365, a new normal arc period 363' is started. The new synchronisation signal 361' results in a new normal arc period 363' and a new undesired arc period 365' determined the same way as described above. This process is repeated as long as the OLTC 102 is in operation.

One scenario is that there are a number of periods of synchronisation signals and associated normal arc periods relatively close to each other, corresponding to the opening and closing of vacuum switches 111a-b. After the sequence of synchronisation signals, there is a longer idle period when no switching, whereby no normal arc periods occur. During the idle period, any arcs can either be considered undesired arcs or they can ignored.

As an example of the discrimination, an arc signal 367 detected at a time 368 is within the normal arc period 363, is considered to be a normal arc from within any of the vacuum containers 111a-b, and an arc signal 369 detected at a time 370 within the undesired arc period is determined to be an undesired arc from outside any of the vacuum containers 111a-b.

The threshold time determining the normal arc period 363 after the synchronisation period is a predetermined value which has been set according to timings of the normal operation of the OLTC 102. Alternatively, the OLTC 102 can provide a second synchronisation signal (not shown), indicating the end of a normal arc period, whereby the normal arc period 363 would be defined by the original synchronisation signal and the second synchronisation signal.

It is to be noted that any suitable synchronisation signal from the OLTC 102 to the arc detector 231 can be used, related to the operation of the OLTC 102. In other words, it is not necessarily a signal representing the opening and/or closing of the vacuum switches. Alternatively, only a synchronisation signal representing the completion of the normal arc period 363 could be used, whereby the arc detector would need to look back in time and determine any arcs within a threshold time back in time from this end-of-period synchronisation signal to be normal. The arc detector 231 would in this case need to retain the times of any arcs received in memory, until this synchronisation signal is received.

One possible source of synchronisation signal is oil pressure. It has been found that when the vacuum switches open or close, this results in a pressure change in the surrounding oil. Consequently, an analysis of the variation in oil pressure can, with necessary signal processing, result in a binary signal indicating that a vacuum switch has been closed or opened.

Fig 4 is a flow chart illustrating a method of detecting undesired arcs according to an embodiment of the present invention.

In an initial receive EM signal step 480, an electromagnetic (EM) signal is received in the arc detector 231.

In a determine arc type step 482, only signals considered to represent arcs are considered, e.g. by only allowing signals with an energy level of sufficient magnitude and/or with sufficient duration, optionally in a particular frequency band. Furthermore, the arc type is determined as described in conjunction with Fig 3 above. The arc type is thus determined to be either a normal arc or an undesired arc.

In a conditional normal or undesired arc step 484, it is determined if the signal representing the arc represents a normal, acceptable arc, or if it represents an undesirable arc. If the arc is determined to be a normal arc, the process continues to a send normal arc type signal 486. Otherwise, the arc is determined to be an undesired arc and the process continues to a send undesired arc type signal step 488.

In the send normal arc type signal step 486, an arc type signal representing a normal arc is sent. This signal can for example be used by a system monitoring device, allowing the system monitoring device to monitor the operation of the OLTC.

In the send undesired arc type signal step 488, an arc type signal representing a normal arc is sent. This signal can for example be used by a system monitoring device, allowing an alarm to be triggered.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A method for detecting arcs of an on-load tap changer (102) of a transformer, said method comprising the steps of:
receiving (480) an electromagnetic signal (230) representing an arc using an antenna (232) and providing an associated arc signal;
repeatedly receiving a synchronisation signal (361, 361');
determining, depending on the time of said arc signal in relation to a most recently received synchronisation signal (361, 361'), whether said arc signal represents a normal arc or an undesired arc,
sending (486) an arc type signal representing a normal arc when it is determined that a normal arc is detected; and
sending (488) an arc type signal representing an undesired arc when it is determined that an undesired arc is detected.

2. The method according to claim 1, wherein said arc type signal representing a normal arc is used to monitor proper operation of said on-load tap changer.

3. The method according to claim 1 or 2, wherein said arc type signal representing an undesired arc is used to trigger an alarm.

4. The method according to any one of claims 1 to 3, wherein a normal arc is an arc inside any vacuum container (111a-b) of said on-load tap changer (102) and an undesired arc is an arc outside any of said vacuum containers (111a-b) of said on-load tap changer.

5. The method according to claim 4, wherein said undesired arc is an arc in oil of said on-load tap changer (102).

6. The method according to any one of the previous claims, wherein said determining involves determining that said arc signal represents a normal arc when a time difference between said arc signal and said most recently received synchronisation signal (361, 361') is less than a threshold time, and that said arc signal represents an undesired arc when said time difference is greater than said threshold time.

7. The method according to any one of the previous claims, wherein said synchronisation signal (361, 361') is generated as a response to an opening vacuum switch (111a-b) of said on-load tap changer.

8. The method according to any one of the previous claims, wherein said synchronisation signal (361, 361') is generated as a response to a closing vacuum switch (111a-b) of said on-load tap changer.

9. The method according to any one of the previous claims, wherein said synchronisation signal (361, 361') is generated as a response to change in oil pressure of said on-load tap changer (102).

10. An arc detector (231) for detecting arcs of an on-load tap changer (102) of a transformer, said arc detector (231) comprising:
an antenna (232) arranged to receive an electromagnetic signal (230) representing an arc and to provide an associated arc signal;
an discriminator arranged to repeatedly receive a synchronisation signal, and wherein said discriminator (248) is further arranged to determine, depending on a time of said arc signal in relation to a most recently received synchronisation signal (361, 361'), when an arc signal from said antenna (232) represents a normal arc or an undesired arc,
**characterised in that**
said discriminator (248) is arranged to send an arc type signal representing a normal arc when it is determined that a normal arc is detected and to send an arc type signal representing an undesired arc when it is determined that an undesired arc is detected.

11. The arc detector according to claim 10, wherein said discriminator is arranged to use a time difference between said arc signal and a most recently received synchronisation signal (361, 361') from said on-load tap changer, to determine when said arc signal represents a normal arc or an undesired arc.
